# EUROPEAN PATENT SPECIFICATION

(11) **EP 0 510 127 B1**
(45) Date of publication and mention of the grant of the patent: **17.07.1996**
(21) Application number: 91914547.4
(22) Date of filing: 07.08.1991
(51) Int. Cl.: B01D 1/16, G01N 21/71

(54) **METHOD AND APPARATUS FOR ANALYTICAL SAMPLE PREPARATION**
VERFAHREN UND VORRICHTUNG ZUR VORBEREITUNG ANALYTISCHER PROBEN
PROCEDE ET DISPOSITIF DE PREPARATION D'UN ECHANTILLON ANALYTIQUE

(30) Priority: 09.08.1990 GB 9017446; 18.09.1990 GB 9020315
(43) Date of publication of application: 28.10.1992
(73) Proprietor: FISONS plc, Ipswich Suffolk IP1 1QH (GB)
(72) Inventor: EASTGATE, Alan, Reuben, CH-1095 Cully (CH); VOGEL, Wilfried, CH-1095 Cully (CH)
(74) Representative: Tomlinson, Kerry John
(86) International application number: PCT/GB91/01345
(87) International publication number: WO 92/02282

(56) References cited:
- DE-A- 3 233 130
- DE-A- 3 424 696
- US-A- 2 839 133
- US-A- 3 269 451
- US-A- 3 398 286
- US-A- 3 495 648
- US-A- 4 556 318
- Dialog Information Services, File 351, World Patent Index 81-91, Dialog accession no. 86-317992/48, TAMBOV CHEM EQUIP, "Solid sample atomising device applies laser radiation to sample through window in cell and conical nozzle passes aerosol directly into heated atomiser", SU 1226206, A, 860423, 8648 (Basic)
- Dialog Information Services, File 351, World Patent Index 81-91, Dialog accession no. 85-288593/46, BALDIN M N, "Chromatographic molecular condensation nuclei detector has photo-reactor communicating with mixer of condenser by cylindrical channel of broken-line shape to exclude ultraviolet radiation", SU 1154593, A, 850507, 8546 (Basic)
- Patent Abstracts of Japan, Vol 12, No 233, P724, abstract of JP 63- 25534, publ 1988-02-03

## Description

This invention relates to apparatus and methods for elemental analysis, in particular to pre-treatment of a sample to be analysed.

Elemental analysis encompasses a variety of techniques which involve the qualitative and/or quantitative determination of the elemental composition of a sample based on the atomic properties of the constituent elements.

One such form of elemental analysis is atomic emission spectroscopy (AES), which involves exciting the chemical elements in a sample to emit light of one or more specific wavelengths (spectral light). Atomisation and excitation of the sample occurs in a suitable source, for example, an inductively coupled plasma (ICP). The technique is conventionally applied to a fine dispersion of the sample under investigation. The dispersion may be prepared by various means; spray generators, thermospray systems, pneumatic nebulisers or ultrasonic nebulisers (USNs) may be used in the case of liquid samples; and electric arc heating or laser ablation used in the case of solid samples.

By liquid sample is meant any sample for analysis in which the analyte(s) are present in a liquid carrier, for example, solutions, disperslons, suspensions, colloids and slurries.

In practice it is found that the quality of the analysis depends strongly on the particle size distribution of the dispersion, the presence of larger particles being deleterious in that the atomisation and excitation of such larger particles is less efficient.

In the case of liquid samples it is also desirable that the liquid carrier is evaporated from the dispersed droplets so that the analyte enters the plasma source as an essentially dry aerosol. Evaporation of the liquid is advantageous because it cancels the cooling effect on the plasma caused by the injection of large volumes of liquid, meaning more energy is available for atomisation and excitation; it also reduces other carrier effects such as plasma, instability and spectral interferences, for example, oxide interferences when the carrier is water.

Conventional methods of evaporation involve passing the dispersed sample, in a flow of carrier gas, through a heated tube, at for example, 130°C, to evaporate the liquid carrier and then through a refrigerated tube to condense and separate the liquid from the analyte aerosol. In such a process the sample is heated, by conduction, to the boiling point of the droplet over a period of about one second, liquid evaporates leaving the analyte contained therein as a single particle. The resulting particle size is therefore defined by the droplet size and the concentration of analyte in the sample. Thus, even with the fine dispersions produced by, for example, USNs the analyte particles left after evaporation of the liquid may still be larger than is desirable for efficient atomisation and excitation.

We have now found that the atomic emission analysis of liquid samples can be substantially improved by a rapid radiative heating of the dispersion, so as to evaporate liquid from the dispersion, when the atoms to be analysed for are still entrained in small droplets, and that this technique is also valuable in preparing samples for other methods of elemental analysis.

Thus, a conventional analytical sample pre-treatment apparatus for the production of aerosols from liquid samples comprises:
a) a nebulizer to produce droplet from the sample;and
b) means for heating the droplets so formed to evaporate liquid therefrom.

The first aspect of the present invention is characterised in that the means for heating the droplets is a radiation source having sufficient power to heat the droplets to above their boiling point in less than 100ms, and to cause the droplets to explode into smaller droplets.

Thus, the radiation source of the invention heats the sample to a temperature above the boiling point of the liquid carrier within a very short time, ie. in less than 0.1s and preferably less than 50ms. Where the carrier is water, for example, the rapid heating may be such as to heat the sample to a temperature of about 200°C within 10ms.

According to a second aspect of the invention there is provided a method of analytical sample pre-treatment for producing aerosols from liquid samples comprising:
a) nebulizing the sample to produce droplets therefrom;and
b) heating the droplets so formed to evaporated liquid therefrom;
characterised in that the droplets are heated by a radiation source which heats the droplets to above their boiling point in less than 100ms and causes the droplets to explode into smaller droplets.

Appropriate analytical techniques which may be used in the method of the invention include optical emission spectroscopy, atomic absorption spectroscopy, atomic fluorescence spectroscopy and mass spectroscopy. The method of the invention may also be used as a means for coupling liquid chromatography units to any of the aforementioned analytical techniques.

According to certain embodiments of the invention, therefore, there is provided a method of the optical emission analysis of a liquid sample, which method comprises the steps of producing an aerosol according to the above mentioned method of analytical sample pre-treatment, exciting the chemical elements in the sample aerosol to emit light, and measuring the intensity of the emitted light at one or more wavelengths.

The excitation of the chemical elements in the sample to emit light may occur in an inductively coupled plasma.

According to certain embodiments of the invention there is provided an optical emission spectrometer, comprising the previously mentioned analytical sample pre-treatment apparatus, means for exciting the chemical elements in the sample aerosol to emit light, and means for measuring the intensity of the emitted light at one or more wavelengths.

Similarly, the scope of the invention includes other analytical techniques (examples of which are given above) and corresponding instruments which are appropriately modified.

The apparatus and method according to the invention are advantageous in that the rapid radiative heating of the sample droplets prevents or inhibits agglomeration of the droplets into larger droplets. This in turn inhibits the formation of relatively large particles of the sample under investigation resulting in improved sensitivity. The rapid radiative heating causes the droplets to 'explode' in the boiling process which may result in the partition of the analyte contained therein into smaller particles, rather than 'drying' slowly leaving all the solid material as a single particle.

An example of the means by which the rapid radiative heating of the sample droplets can be achieved is to place the dispersed sample at one focus of a reflector or a lens and to heat it with a radiation source placed at the other focus.

We prefer the heating to be achieved using a reflector, more preferably an ellipsoidal reflector, particularly an ellipsoidal metal reflector.

The sample droplets may be heated by intense microwave heating at 22.3GHz (in the case of aqueous liquids). However, we prefer the radiation source to be a heat-bar.

The surface of the heat-bar is preferably chosen to be strongly emissive in those regions of the infrared spectrum where the liquid carrier is strongly absorbing. For example, where the carrier is water the heat-bar may have a surface of silicon carbide.

During heating, the sample droplets may be held in a heating chamber, for example, a tube which is transparent to the heating radiation, e.g. a tube of infrared transmissive quartz. The heating chamber may be in the form of a flow-through tube. However, we prefer the heating chamber to be such that re-condensed liquid cannot re-enter the region in which evaporation of the liquid occurs. A suitable form is a vertical tube sealed at one end with both the inlet and the outlet in the other end.

After heating, the sample aerosol may be separated from the evaporated liquid by one or more liquid removal devices, suitable devices include condensers and gas diffusion cells.

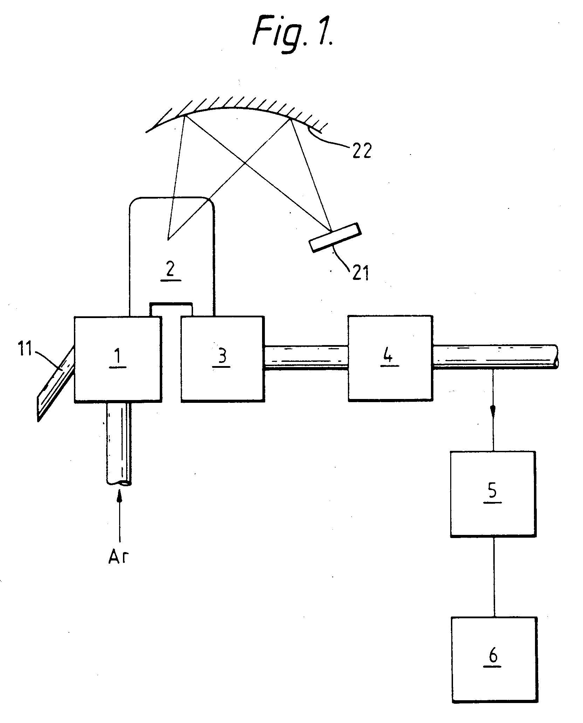

A preferred embodiment of the invention will now be described, by way of illustration only, with reference to the accompanying drawing in which
Figure 1 is a schematic view of an atomic emission spectrometer.

An atomic emission spectrometer comprises a sample conduit upon which are sequentially situated a nebuliser (1), a sample heating chamber (2), a condenser (3) and an ICP torch (4).

A liquid sample of the material under investigation is introduced into the nebuliser (1) via a sample inlet port (11) and nebulised i.e. converted to a fine dispersion. The conduit is flushed with argon gas from a pressurised cylinder (not shown) such that the dispersed sample is carried successively through the heating chamber (2), the condenser (3) and the ICP torch (4).

The heating chamber (2) is located at one focus of an ellipsoidal reflector (22). In the heating chamber (2) the sample is subjected to rapid radiative heating by means of a heat-bar (21) located at the other focus of the reflector (22). The surface of the heat-bar (21) is chosen to be strongly emissive in those regions of the infrared spectrum at which the liquid carrier of the sample is strongly absorbing. The heating chamber (2) comprises a tube of material which is transparent at these wavelengths, and is in the form of a vertical tube sealed at the top with both the inlet and the outlet in the base.

After heating, and evaporation of liquid from the sample, the sample aerosol passes through the condenser (3) where the sample analyte is separated from the evaporated carrier. The sample aerosol then passes into the ICP torch (4) where it is excited to emission at temperatures of 4,000 to 8,000K.

The emitted light is dispersed by a monochromator (5) and its intensity at the wavelength of interest is measured by a detector (6).

The nebuliser (1), condenser (2), ICP torch (4), monochromator (5) and detector (6) may be of conventional design.

## Claims

1. An analytical sample pre-treatment apparatus for the production of aerosols from liquid samples comprising:
a) a nebulizer (1) to produce droplets from the sample;and
b) means (21) for heating the droplets so formed to evaporate liquid therefrom;
characterised in that the means for heating the droplets is a radiation source (21) having sufficient power to heat the droplets to above their boiling point in less than 100ms, and to cause the droplets to explode into smaller droplets.

2. An apparatus according to claim 1, further comprising at least one condenser (3) to remove evaporated liquid from the sample aerosol.

3. An apparatus according to claim 1 or 2, wherein the sample droplets are radiatively heated within a heating chamber (2) the walls of which are transparent to the heating radiation.

4. An apparatus according to any one of claims 1 to 3, wherein the radiation source is positioned at one focus of a reflector (22) or lens, the nebulized sample being positioned at the other focus.

5. An apparatus according to claim 4, wherein the radiation source is a heat-bar (21).

6. An apparatus according to claim 4 or claim 5, wherein the reflector is an ellipsoidal metal reflector (22).

7. An optical emission spectrometer, comprising pre-treatment apparatus as claimed in any of claims 1 to 6, means for exciting the chemical elements in the sample aerosol to emit light, and means for measuring the intensity of the emitted light at one or more wavelengths.

8. A mass spectrometer, comprising pre-treatment apparatus as claimed in any of claims 1 to 6 and means for analysing the sample by mass spectrometry.

9. A method of analytical sample pre-treatment for producing aerosols from liquid samples comprising:
a) nebulizing the sample to produce droplets from the sample;and
b) heating the droplets so formed to evaporate liquid herefrom;
characterised in that the droplets are heated by a radiation source which heats the droplets to above their boiling point in less than 100ms and causes the droplets to explode into smaller droplets.

10. A method for the elemental analysis of a liquid sample comprising the steps of producing an aerosol according to the method of claim 9 and analysing the aerosol by an appropriate technique.

11. A method for the optical emission analysis of a liquid sample, which method comprises the steps of: producing an aerosol according to the method of claim 9, exciting the chemical elements in the sample aerosol to emit light, and measuring the intensity of the emitted light at one or more wavelengths.

12. A method according to claim 11, wherein excitation of the chemical elements in the sample to emit light occurs in an inductively coupled plasma.

13. A method for the mass spectrometric analysis of a liquid sample, which method comprises the steps of producing an aerosol according to the method of claim 9 and analysing the sample by means of mass spectrometry.

14. A method according to claim 13, wherein ionisation of the chemical elements in the sample occurs in an inductively coupled plasma.

## Patentansprüche

1. Analytische Probenvorbehandlungsvorrichtung zur Herstellung von Aerosolen aus flüssigen Proben, umfassend:
a) einen Zerstäuber (1) zum Herstellen von Tröpfchen aus der Probe; und
b) Mittel (21) zum Erhitzen der derart gebildeten Tröpfchen, um Flüssigkeit daraus zu evaporieren;
dadurch gekennzeichnet,
daß das Mittel zum Erhitzen der Tröpfchen eine Strahlungsquelle (21) mit genügend Leistung ist, um die Tröpfchen in weniger als 100 Millisekunden über ihren Siedepunkt zu erhitzen und um zu bewirken, daß die Tröpfchen in kleinere Tröpfchen zerplatzen.

2. Vorrichtung nach Anspruch 1 ferner umfassend wenigstens einen Kondensierer (3) zum Entfernen von evaporierter Flüssigkeit von dem Probenaerosol.

3. Vorrichtung nach Anspruch 1 oder 2, bei welcher die Probentröpfchen in einer Heizkammer (2) strahlungserhitzt werden, deren Wände für die Heizstrahlung durchlässig sind.

4. Vorrichtung nach einem der Ansprüche 1 bis 3, bei welcher die Strahlungsquelle in einem Brennpunkt eines Reflektors (22) oder einer Linse positioniert ist, wobei die zerstäubte Probe in dem anderen Brennpunkt positioniert ist.

5. Vorrichtung nach Anspruch 4, bei welcher die Strahlungsquelle ein Heizstab (21) ist.

6. Vorrichtung nach Anspruch 4 oder Anspruch 5, bei welcher der Reflektor ein Ellipsoidmetallreflektor (22) ist.

7. Optisches Emissionsspektrometer, umfassend eine Vorbehandlungsvorrichtung nach einem der Ansprüche 1 bis 6, Mittel zum Anregen der chemischen Elemente in dem Probenaerosol zum Aussenden von Licht sowie Mittel zum Messen der Intensität des ausgesandten Lichts bei einer oder mehreren Wellenlängen.

8. Massenspektrometer, umfassend eine Vorbehandlungsvorrichtung nach einem der Ansprüche 1 bis 6 und Mittel zum Analysieren der Probe durch Massenspektrometrie.

9. Verfahren der analytischen Probenvorbehandlung zur Herstellung von Aerosolen aus flüssigen Proben, umfassend:
a) Zerstäuben der Probe, um Tröpfchen aus der Probe herzustellen;
b) Erhitzen der derart gebildeten Tröpfchen, um Flüssigkeit daraus zu evaporieren;
dadurch gekennzeichnet,
daß die Tröpfchen von einer Strahlungsquelle erhitzt werden, die die Tröpfchen in weniger als 100 Millisekunden über ihren Siedepunkt erhitzt und bewirkt, daß die Tröpfchen in kleinere Tröpfchen zerplatzen.

10. Verfahren zur Elementaranalyse einer flüssigen Probe, umfassend die Schritte: Herstellen eines Aerosols nach dem Verfahren von Anspruch 9 und Analysieren des Aerosols durch eine geeignete Methode.

11. Verfahren für die optische Emissionsanalyse einer flüssigen Probe, welches Verfahren die Schritte umfaßt: Herstellen eines Aerosols nach dem Verfahren von Anspruch 9, Anregen der chemischen Elemente in dem Probenaerosol zum Aussenden von Licht und Messen der Intensität des ausgesandten Lichts bei einer oder mehreren Wellenlängen.

12. Verfahren nach Anspruch 11, bei welchem eine Anregung der chemischen Elemente in der Probe zum Aussenden von Licht in einem induktiv gekoppelten Plasma geschieht.

13. Verfahren zur massenspektrometrischen Analyse einer flüssigen Probe, welches Verfahren die Schritte umfaßt: Herstellen eines Aerosols nach dem Verfahren von Anspruch 9 und Analysieren der Probe mittels Massenspektrometrie.

14. Verfahren nach Anspruch 13, bei welchem eine Ionisation der chemischen Elemente in der Probe in einem induktiv gekoppelten Plasma geschieht.

## Revendications

1. Un dispositif de prétraitement analytique d'un échantillon pour la production d'aérosols à partir d'échantillons liquides comprenant :
a) un nébuliseur (1) pour produire des gouttelettes à partir de l'échantillon ; et
b) un moyen (21) pour chauffer les gouttelettes ainsi formées pour évaporer du liquide à partir de celles-ci ;
caractérisé en ce que le moyen pour chauffer les gouttelettes est une source de radiation (21) ayant une puissance suffisante pour chauffer les gouttelettes jusqu'au-dessus de leur point d'ébullition en moins de 100 ms, et pour faire éclater les gouttelettes en de plus petites gouttelettes.

2. Un dispositif conforme à la revendication 1, comprenant en outre au moins un condenseur (3) pour retirer du liquide évaporé de l'aérosol d'échantillon.

3. Un dispositif conforme à la revendication 1 ou 2, dans lequel les gouttelettes d'échantillon sont chauffées radiativement à l'intérieur d'une chambre de chauffage (2) dont les parois sont transparentes à la radiation de chauffage.

4. Un dispositif conforme à l'une quelconque des revendications 1 à 3, dans lequel la source de radiation est positionnée à un foyer d'un réflecteur (22) ou d'une lentille, l'échantillon nébulisé étant positionné à l'autre foyer.

5. Un dispositif conforme à la revendication 4, dans lequel la source de radiation est un barreau de chaleur (21).

6. Un dispositif conforme à la revendication 4 ou la revendication 5, dans lequel le réflecteur est un réflecteur métallique ellipsoïdal (22).

7. Un spectromètre d'émission optique, comprenant un dispositif de prétraitement comme revendiqué dans l'une quelconque des revendications 1 à 6, un moyen pour exciter les éléments chimiques dans l'aérosol d'échantillon pour émettre de la lumière, et un moyen pour mesurer l'intensité de la lumière émise à une ou plusieurs longueurs d'onde.

8. Un spectromètre de masse, comprenant un dispositif de prétraitement comme revendiqué dans l'une quelconque des revendications 1 à 6 et un moyen pour analyser l'échantillon par spectrométrie de masse.

9. Un procédé de prétraitement analytique d'un échantillon pour produire des aérosols à partir d'échantillons liquides comprenant :
a) la nébulisation de l'échantillon pour produire des gouttelettes à partir de l'échantillon ; et
b) le chauffage des gouttelettes ainsi formées pour évaporer le liquide à partir de celles-ci ;
caractérisé en ce que les gouttelettes sont chauffées par une source de radiation qui chauffe les gouttelettes jusqu'au-dessus de leur point d'ébullition en moins de 100 ms et fait éclater les gouttelettes en de plus petites gouttelettes.

10. Un procédé pour l'analyse élémentaire d'un échantillon liquide comprenant les étapes de production d'un aérosol selon le procédé de la revendication 9 et d'analyse de l'aérosol par une technique appropriée.

11. Un procédé pour l'analyse de l'émission optique d'un échantillon liquide, lequel procédé comprend les étapes de : produire un aérosol selon le procédé de la revendication 9, exciter les éléments chimiques dans l'aérosol d'échantillon pour émettre de la lumière, et mesurer l'intensité de la lumière émise à une ou plusieurs longueurs d'onde.

12. Un procédé conforme à la revendication 11, dans lequel l'excitation des éléments chimiques dans l'échantillon pour émettre de la lumière a lieu dans un plasma couplé inductivement.

13. Un procédé pour l'analyse spectrométrique de masse d'un échantillon liquide, lequel procédé comprend les étapes de production d'un aérosol selon le procédé de la revendication 9 et d'analyse de l'échantillon au moyen de la spectrométrie de masse.

14. Un procédé conforme à la revendication 13, dans lequel l'ionisation des éléments chimiques dans l'échantillon a lieu dans un plasma couplé inductivement.
